# EUROPÄISCHE PATENTSCHRIFT

(11) **EP 1 796 104 B1**
(45) Veröffentlichungstag und Bekanntmachung des Hinweises auf die Patenterteilung: **20.02.2013**
(21) Anmeldenummer: 06024986.9
(22) Anmeldetag: 04.12.2006
(51) Int. Cl.: G21B 1/13

(54) **Erste-Wand-Komponente mit Ringsegment**
First wall component with ring segment
Composant de première paroi doté d'un segment annulaire

(30) Priorität: 06.12.2005 AT 83005 U
(43) Veröffentlichungstag der Anmeldung: 13.06.2007
(73) Patentinhaber: PLANSEE SE, 6600 Reutte (AT)
(72) Erfinder: Schedler, Bertram, 6600 Reutte (AT); Huber, Thomas, 6600 Breitenwang (AT); Friedrich, Thomas, 87642 Halblech (DE); Scheiber, Karlheinz, 6600 Breitenwang (AT); Schedle, Dietmar, 6600 Reutte (AT); Zabernig, Anton, 6600 Reutte (AT); Friedle, Hans-Dieter, 6651 Häselgehr (AT); Mair, Sandra, 6600 Reutte (AT); Wörle, Nadine, 6600 Musau (AT)

(56) Entgegenhaltungen:
- US-A- 4 852 645
- US-A- 5 182 075
- US-A- 5 806 588
- US-A1- 2004 195 296
- DATABASE INSPEC [Online] THE INSTITUTION OF ELECTRICAL ENGINEERS, STEVENAGE, GB; 1995, EID M ET AL: "On the use of double-walled tubes as a means to improve safety and availability of the EU DEMO water-cooled Pb-17Li blanket", XP002665677, Database accession no. 5028340 & PROCEEDINGS OF 18TH SYMPOSIUM ON FUSION TECHNOLOGY 22-26 AUG. 1994 KARLSRUHE, GERMANY, Bd. 2, 1994, Seiten 1273-1276 VOL., Fusion Technology 1994. Proceedings of the 18th Symposium on Fusion Technology Elsevier Amsterdam, Netherlands ISBN: 0-444-82220-8

## Beschreibung

Die Erfindung betrifft eine Erste-Wand-Komponente eines Fusionsreaktors, die zumindest einen Hitzeschild aus einem grafitischen Werkstoff und ein Kühlrohr aus Kupfer oder einer Kupferlegierung umfasst, wobei der Hitzeschild eine geschlossene oder offene Durchführung aufweist.

Ein typisches Beispiel für den Einsatz derartiger Erste-Wand-Komponenten sind Divertor und Limiter, die höchsten thermischen Belastungen von über 10 MW/m² ausgesetzt sind. Erste-Wand-Komponenten bestehen üblicherweise aus einem Hitzeschild und einem Wärme abführenden Bereich. Der Werkstoff des Hitzeschildes muss mit dem Plasma kompatibel sein, eine hohe Resistenz gegenüber physikalischem und chemischem Sputtern aufweisen, einen hohen Schmelzpunkt / Sublimationspunkt besitzen und gegenüber Thermoschock möglichst beständig sein. Daneben müssen sie noch eine hohe thermische Leitfähigkeit, geringe Neutronen-Aktivierbarkeit und ausreichende Festigkeit / Bruchzähigkeit aufweisen, bei guter Verfügbarkeit und akzeptablen Kosten. Neben Refraktärmetallen, wie beispielsweise Wolfram, erfüllen grafitische Werkstoffe dieses vielfältige und zum Teil gegenläufige Anforderungsprofil am besten. Da die Energieströme aus dem Plasma über einen längeren Zeitraum auf diese Komponenten einwirken, werden derartige Erste-Wand-Komponenten typischerweise aktiv gekühlt. Die Wärmeabfuhr wird durch Wärmesenken, beispielsweise aus Kupfer oder Kupferlegierungen unterstützt, die mit dem Hitzeschild üblicherweise stoffschlüssig verbunden sind.
Das Kupfer hat die Funktion, die Wärmeabfuhr sicherzustellen. Daneben kann es auch die Funktion des Spannungsabbaus übernehmen, wie dies der Fall ist, wenn Grafit über eine Reinkupfer-Zwischenlage mit einer hochfesten Kupferlegierung (z.B. Cu-Cr-Zr) verbunden wird. Die Kupferschicht hat dabei üblicherweise eine Stärke von 0,5 bis 3 mm.

Neben den Bereichen aus Grafit und einem oder mehreren Kupferwerkstoffen können derartige Erste-Wand-Komponenten auch weitere Bereiche, z.B. aus Stahl oder einer Wolframlegierung aufweisen.

Der Fügebereich zwischen Grafit und Kupfer stellt den Schwachpunkt derartiger Werkstoffverbunde dar. Ein Verfahren zur Herstellung von Kühleinrichtungen mit verbesserter Festigkeit im Fügebereich wird in der EP 0 663 670 B1 beschrieben. Dabei wird das Metall der Kühleinrichtung in schmelzflüssigem Zustand mit den Teilen eines hitzebeständigen Materials in Kontakt gebracht, wobei während des Verbindungsvorganges im Fügebereich Anteile von einem oder mehreren Metallen der IV. und/oder V. Nebengruppe des Periodensystems bereitgestellt werden. Derartig hergestellte Werkstoffverbunde weisen eine deutlich verbesserte Festigkeit auf.

Ein weitere Beispiel von Erste-Wand-Komponente eines Fusionsreaktors mit einem Hitzeschild aus grafitischem Werkstoff und einem Kühlrohr aus Kupferlegierung ist aus US-A-5 182 075 bekannt.

Erste-Wand-Komponenten können mit unterschiedlichem Design ausgeführt werden. Es wird dabei zwischen Flachziegel-, Sattel- und Monoblock-Design unterschieden.

Wird ein Hitzeschild mit planer Verbindungsfläche mit der Kühlmittel-durchflossenen Wärmesenke verbunden, spricht man von einem Flachziegel-Design. Beim Sattel-Design wird ein Hitzeschild mit halbkreisförmiger Ausnehmung mit einer rohrförmig ausgeführten Wärmesenke verbunden. Die Wärmesenke hat dabei jeweils die Funktion, den thermischen Kontakt zwischen der Wärmeeintragseite und dem Kühlmedium herzustellen und ist dabei zyklischen, thermisch induzierten Lasten ausgesetzt, die sich aus dem Temperaturgradienten und den unterschiedlichen Ausdehnungskoeffizienten der Fügepartner ergeben. Beim Monoblock-Design besteht die Erste-Wand-Komponente aus einem Hitzeschild mit konzentrischer Durchführung. Über diese konzentrische Durchführung ist der Hitzeschild mit einem Kühlrohr verbunden.
Aufgrund der geometrischen Bedingungen erfolgt der Spannungsabbau durch plastische Deformation der Kupferzwischenschicht beim Flachziegel-Design effektiver als beim Monoblock-Design, wo ein dreiachsiger Spannungszustand vorliegt, der eine plastische Verformung weitestgehend unterdrückt. Aufgrund dieses eingeschränkten Spannungsabbaus kann es daher zu Rissen im grafitischen Werkstoff kommen.

Erste-Wand-Komponenten müssen nicht nur thermisch induzierte, sondern auch zusätzlich auftretende mechanische Spannungen ertragen. Solche zusätzlichen, mechanischen Lasten können über elektromagnetisch induzierte Ströme erzeugt werden, die in den Komponenten fließen und mit dem Magnetfeld der Umgebung in Wechselwirkung treten. Dabei können hochfrequente Beschleunigungskräfte auftreten, die vom Hitzeschild übertragen werden müssen. Grafitische Werkstoffe weisen jedoch eine geringe mechanische Festigkeit und Bruchzähigkeit auf. Zusätzlich tritt während des Einsatzes Neutronenversprödung auf, wodurch es zu einer weiteren Erhöhung der Empfindlichkeit dieser Werkstoffe gegenüber Risseinleitung kommt.

Als grafitischer Werkstoff kommt üblicherweise faserverstärkter Grafit (CFC) zum Einsatz. Die Faserverstärkung ist dabei dreidimensional und linear angeordnet. Die Architektur der Fasern gibt dem Werkstoff je nach Raumrichtung unterschiedliche Eigenschaften. CFC ist üblicherweise in einer Raumrichtung durch Ex-Pitch Fasern verstärkt, die sowohl die höchste Festigkeit als auch Wärmeleitfähigkeit aufweisen. Die beiden anderen Raumrichtungen sind durch Ex-PAN-Fasern verstärkt, wobei eine Richtung typischer Weise nur vernadelt ist.
Während also CFC eine lineare Werkstoffarchitektur aufweist, ist die Verbindungsgeometrie Hitzeschild / Kühlrohr im Falle der Monoblock-Bauweise zirkular. Auf Grund der unterschiedlichen Wärmeausdehnungskoeffizienten der verwendeten Werkstoffe kommt es beim Herstellprozess zu einem Aufbau von Spannungen, die zu Rissen im CFC führen können.
Diese Risse sind auf Grund der geometrischen Gegebenheiten und der verwendeten Werkstoffkombination, wenn überhaupt, nur mit sehr aufwendigen Methoden detektierbar. Dies wirft vor dem Hintergrund einer nuklearen Umgebung für solche Komponenten entsprechende Probleme auf, vor allem auch deshalb, weil Risse / Ablösungen als möglicher Auslöser für einen größeren Störfall gesehen werden.

Trotz jahrelanger aufwendiger Entwicklungstätigkeit auf dem Gebiet von Erste-Wand-Komponenten erfüllen die bis dato vorliegenden Bauteile das Anforderungsprofil nicht in optimaler Weise.

Aufgabe der Erfindung ist es daher eine Erste-Wand-Komponente im Monoblock-Design bereit zu stellen, die den aus mechanischen und physikalischen Beanspruchungen resultierenden Anforderungen in geeigneter Weise gerecht wird.

Gelöst wird diese Aufgabe gemäß den Merkmalen von Anspruch 1.

Die Erste-Wand-Komponente umfasst dabei zumindest einen Hitzeschild aus einem grafitischen Werkstoff und ein Kühlrohr aus Kupfer oder einer Kupferlegierung, wobei der Hitzeschild eine geschlossene oder offene Durchführung aufweist und zwischen Hitzeschild und Kühlrohr ein Rohrsegment angeordnet ist. Das Rohrsegment ist mit dem Hitzeschild und dem Kühlrohr jeweils über duktile Kupferschichten verbunden.
Das Rohrsegment bewirkt, dass die Eigenspannungen im Hitzeschild, die aus den unterschiedlichen Ausdehnungskoeffizienten resultieren, reduziert werden. Um dies in optimaler Weise zu erreichen, ist es vorteilhaft, wenn die Ausdehnungskoeffizienten des Hitzeschilds und des Rohrsegments ähnlich sind und das Rohrsegment eine ausreichende Dicke von zumindest 0,2 mm, eine möglichst hohe Wärmeleitfähigkeit und Steifigkeit aufweist. Bei geringeren Dicken wird keine ausreichend hohe Reduktion der Spannungen realisiert. Eine obere Grenze von in etwa 1,5 mm ergibt sich aus geometrischen Gegebenheiten.
Die mechanisch / physikalischen Anforderungen an das Rohrsegment erfüllen am besten Werkstoffe aus der Gruppe Molybdän, Molybdänlegierungen, Wolfram, Wolframlegierungen.
Besonders hervorzuheben sind dabei die Pseudolegierungen im System Wolfram-Kupfer und im System Molybdän-Kupfer. Im Falle von Wolfram-Kupfer liegt der bevorzugte Kupfergehalt bei 5 bis 25 Gew.%, im Falle von Molybdän-Kupfer bei 15 bis 40 Gew.%. Das Rohrsegment weist bevorzugt einen Öffnungswinkel α von 20° bis 180°, bevorzugt von 50° bis 130°, auf. Bei größeren Öffnungswinkeln ist die Reduktion der Spannungen nicht ausreichend. Bei kleineren Öffnungswinkeln wird der Wärmefluss behindert.
Es erweist sich des Weiteren als günstig, wenn die Winkelhalbierende des Öffnungswinkels α senkrecht zu der dem Plasma ausgesetzten Oberfläche des Hitzeschilds steht. Der Hitzeschild ist über eine kupferhaltige Schicht mit dem Rohrsegment verbunden, wobei das Rohrsegment wiederum ebenfalls über eine kupferhaltige Schicht mit dem Kühlrohr verbunden ist. Diese Schichten dienen ebenfalls dem Spannungsabbau. Der Öffnungsbereich des Rohrsegments ist ebenfalls mit Kupfer oder einer Kupferlegierung gefüllt, so dass in diesem Bereich der Hitzeschild über diesen kupferhaltigen Bereich mit dem Kühlrohr verbunden ist. Dadurch wird in diesem Bereich der Wärmefluss durch das Rohrsegment nicht beeinträchtigt.
Die Durchführung des Hitzeschilds ist bevorzugt geschlossen und als Bohrung ausgeführt, deren Wandung mittels Laser strukturiert ist, wobei die Wandung metallisch und/oder karbidisch aktiviert wird.

Zur Herstellung der erfindungsgemäßen Erste-Wand-Komponente wird zunächst eine Durchführung, bevorzugt eine Bohrung in einem Block aus einem grafitischen Werkstoff, bevorzugt CFC, eingebracht. Die Oberfläche der Durchführung wird in bevorzugter Weise mittels Laser strukturiert und anschließend derart metallisch und/oder karbidisch aktiviert, dass die aktivierte Oberfläche durch flüssiges Kupfer benetzbar wird. In die derart vorbehandelte Durchführung wird anschließend das Rohrsegment eingesetzt. Die bevorzugte Dicke des Rohrsegments beträgt dabei 0,2 bis ca. 1,5 mm. Der Spalt zwischen Rohrsegment und der Wandung der aktivierten Durchführung beträgt in etwa 0,2 bis 0,8 mm. In diesen Spalt wird eine Hülse aus reinem Kupfer eingebracht. Auch am Innendurchmesser des Rohrsegments wird eine Hülse aus Rein-Kupfer positioniert. Der so hergestellte Aufbau wird unter Vakuum oder Schutzgas auf eine Temperatur über dem Schmelzpunkt von Kupfer erhitzt. Um ein Nachfüllen von Kupfer, vor allem im Spalt zwischen CFC und dem Rohrsegment und im Öffnungsbereich des Rohrsegments zu gewährleisten, ist ein entsprechendes Kupfer-Depot vorgesehen.
Dadurch ergibt sich ein Verbund mit folgendem radialem Aufbau (von außen nach innen): CFC / Aktivierungsschicht / Kupfer / Molybdän-Kupfer oder Wolfram-Kupfer / Kupfer.
Mit der inneren Kupferschicht kann mit üblichen Standardverfahren, wie Löten oder HIP, ein Kühlrohr aus einer Kupferlegierung, bevorzugt Kupfer-Chrom-Zirkon, stoffschlüssig verbunden werden.

Im Folgenden ist die Erfindung durch ein Beispiel näher erläutert.

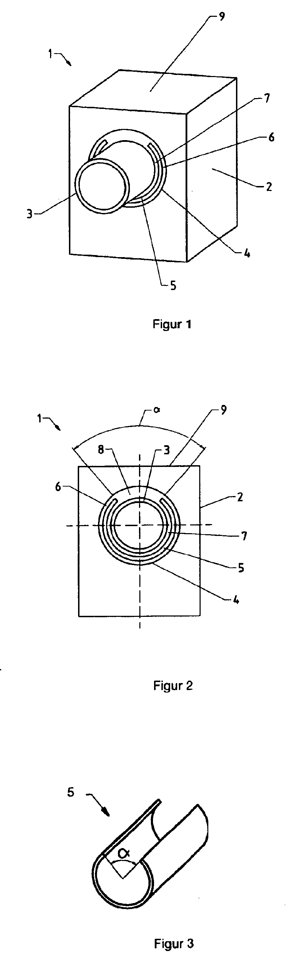

- Figur 1: zeigt die erfindungsgemäße Erste-Wand-Komponente im Schrägbild.
- Figur 2: zeigt die erfindungsgemäße Erste-Wand-Komponente gemäß Figur 1 im Aufriss.
- Figur 3: zeigt das Rohrsegment im Schrägbild.

### Beispiel

Für die Herstellung einer Erste-Wand-Komponente -1- kam ein CFC-Hitzeschild -2- mit der Abmessung 45 mm x 30 mm x 25 mm zum Einsatz. Der CFC-Hitzeschild -2- wies eine 3D-Faserstruktur auf, wobei je nach Richtung unterschiedliche Eigenschaften vorlagen. Die Fasern mit der höchsten Wärmeleitfähigkeit lagen parallel zur Außenabmessung 45 mm. Die Faserbündel mit der mittleren Wärmeleitfähigkeit lagen parallel zur Außenabmessung 30 mm. Eine durchgehende Bohrung -4- mit einem Durchmesser von 18 mm wurde normal zur Fläche 30 mm x 45 mm in deren Symmetriezentrum eingebracht. Diese 25 mm tiefe Bohrung wurde anschließend mittels Laser strukturiert, wobei eine Vergrößerung der Oberfläche von mehr als 100 % erreicht wurde. Die konischen Laserbohrungen wiesen eine Tiefe von etwa 1.000 µm auf, wobei die Öffnungsweite an der Oberfläche bei etwa 200 µm lag. Die Abfolge der Laserimpulse wurde dabei so gewählt, dass die einzelnen Bohrungen möglichst dicht beieinander lagen. Die derart behandelte Oberfläche wurde aktiviert, so dass eine karbidisch gebundene, durch flüssiges Kupfer benetzbare Oberfläche auf dem CFC-Material -2- entstand. Dies wurde dadurch erreicht, dass Titan auf der Oberfläche aufgebracht wurde. Danach wurde der Teil auf eine Temperatur über dem Schmelzpunkt von Titan erhitzt, wobei das schmelzflüssige Titan durch die wirkenden Kapillarkräfte unter der Bildung von Titankarbid in den CFC penetrierte. Titankarbid haftet einerseits durch eine sehr gute chemische Bindung am CFC und macht andererseits den Hitzeschild -2- für das flüssige Kupfer benetzbar. In die aktivierte Bohrung -4- wurde nun eine Rein-Kupfer-Folie mit einer Stärke von 0,4 mm derart positioniert, dass sich ein Zylinder bildete, welcher an der Bohrungsinnenseite des Hitzeschilds -2- anlag.

Anschließend wurde ein Rohrsegment -5- aus W-10Gew.%Cu mit einer Höhe von 25 mm, einem Außendurchmesser von 17 mm, einer Wandstärke von 0,5 mm und einem Öffnungswinkel α von 90° in die Bohrung eingebracht. Die Winkelhalbierende des Öffnungswinkels α lag dabei senkrecht zur Fläche 45 mm x 25 mm. Diese Fläche -9- ist im Einsatz dem Plasma ausgesetzt. Im inneren Bereich des Rohrsegments -5- wurde ein Kupferkern mit einem Außendurchmesser von 15,8 mm positioniert, wobei dieser Kern einen Kopf mit Durchmesser von 20 mm aufwies. Dieser Kopf erfüllte die Funktion des Schmelzdepots. Anschließend wurde dieser Zusammenbau in einem Vakuumofen eingebaut und unter Vakuum etwa 10 Minuten auf 1.100°C erhitzt, bevor die Abkühlphase eingeleitet wurde.

Dadurch wurde der Hitzeschild -2- über die Kupferschicht -6- mit dem Rohrsegment -5- verbunden. Der Öffnungsbereich -8- des Rohrsegments -5- ist ebenfalls mit Kupfer gefüllt. Anschließend wurde der so hergestellte Monoblock allseitig bearbeitet. Die ursprünglichen Außenmaße reduzierten sich dabei um jeweils 1 mm, wodurch der Monoblock vor der weiteren Verarbeitung Außenabmessungen von 44 mm x 29 mm x 24 mm aufwies. Die mit Kupfer gefüllte Durchführung -4- wurde auf einen Durchmesser von 15 mm ausgebohrt. Der Innendurchmesser weist dabei eine durchgehende Kupferschicht -7- auf. In der Durchführung -4- wurde nun ein Kupfer-Chrom-Zirkon-Rohr -3- mit einem Außendurchmesser von 14,8 mm positioniert. Kühlrohr -3- und Monoblock wurden anschließend über einen HIP-Prozess stoffschlüssig verbunden, so dass eine aktiv kühlbare Erste-Wand-Komponente -1- entstand.

## Patentansprüche

1. Erste-Wand-Komponente (1) eines Fusionsreaktors, die zumindest einen Hitzeschild (2) aus einem grafitischen Werkstoff und ein Kühlrohr (3) aus Kupfer oder einer Kupferlegierung umfasst, wobei der Hitzeschild (2) eine geschlossene oder offene Durchführung (4) aufweist,
**dadurch gekennzeichnet,**
**dass** zwischen dem Hitzeschild (2) und dem Kühlrohr (3) ein Rohrsegment (5) angeordnet ist, wobei das Rohrsegment (5) zumindest bereichsweise mit dem Hitzeschild (2) und mit dem Kühlrohr (3) über kupferhaltige Schichten (6,7) verbunden ist.

2. Erste-Wand-Komponente (1) nach Anspruch 1, **dadurch gekennzeichnet, dass** das Rohrsegment (5) einen Öffnungswinkel α von 20 bis 180° aufweist.

3. Erste-Wand-Komponente (1) nach Anspruch 2, **dadurch gekennzeichnet, dass** der Öffnungswinkel α des Rohrsegments (5) 50° bis 130° beträgt.

4. Erste-Wand-Komponente (1) nach einem der Ansprüche 1 bis 3, **dadurch gekennzeichnet, dass** die Winkelhalbierende des Öffnungswinkels a senkrecht zu der dem Plasma ausgesetzten Oberfläche (9) des Hitzeschilds (2) steht.

5. Erste-Wand-Komponente (1) nach einem der Ansprüche 1 bis 4, **dadurch gekennzeichnet, dass** das Rohrsegment (5) eine Wandstärke von 0,2 bis 1,5 mm aufweist.

6. Erste-Wand-Komponente (1) nach einem der Ansprüche 1 bis 5, **dadurch gekennzeichnet, dass** der Hitzeschild (2) im Bereich der Öffnung (8) des Rohrsegmentes (5) über einen kupferhaltigen Bereich mit dem Kühlrohr (3) verbunden ist.

7. Erste-Wand-Komponente (1) nach einem der Ansprüche 1 bis 6, **dadurch gekennzeichnet, dass** das Rohrsegment (5) aus einem Werkstoff der Gruppe Molybdän, Molybdänlegierung, Wolfram, Wolframlegierung besteht.

8. Erste-Wand-Komponente (1) nach Anspruch 7, **dadurch gekennzeichnet, dass** das Rohrsegment (5) aus Mo-Cu oder W-Cu besteht.

9. Erste-Wand-Komponente (1) nach einem der Ansprüche 1 bis 8, **dadurch gekennzeichnet, dass** der Hitzeschild (2) aus CFC besteht.

10. Erste-Wand-Komponente (1) nach einem der Ansprüche 1 bis 9, **dadurch gekennzeichnet, dass** Kühlrohr (3) aus Cu-Cr-Zr besteht.

11. Erste-Wand-Komponente (1) nach einem der Ansprüche 1 bis 10, **dadurch gekennzeichnet, dass** die Durchführung (4) eine Bohrung ist.

12. Erste-Wand-Komponente (1) nach einem der Ansprüche 1 bis 11, **dadurch gekennzeichnet, dass** die Durchführung (4) mittels Laser strukturiert ist.

13. Erste-Wand-Komponente (1) nach einem der Ansprüche 1 bis 12, **dadurch gekennzeichnet, dass** die Wandung der Durchführung (4) zumindest bereichsweise eine Titankarbid-Schicht aufweist.

## Claims

1. First-wall component (1) of a fusion reactor, which comprises at least one heat shield (2) of a graphitic material and a cooling tube (3) of copper or a copper alloy, the heat shield (2) having a closed or open passage (4) **characterized in that** a tube segment (5) is arranged between the heat shield (2) and the cooling tube (3), the tube segment (5) being connected at least in certain regions to the heat shield (2) and to the cooling tube (3) via copper-containing layers (6, 7).

2. First-wall component (1) according to Claim 1, **characterized in that** the tube segment (5) has an opening angle α of from 20 to 180°.

3. First-wall component (1) according to Claim 2, **characterized in that** the opening angle α of the tube segment (5) is 50° to 130°.

4. First-wall component (1) according to one of Claims 1 to 3, **characterized in that** the angle bisector of the opening angle α is perpendicular to the surface (9) of the heat shield (2) that is exposed to the plasma.

5. First-wall component (1) according to one of Claims 1 to 4, **characterized in that** the tube segment (5) has a wall thickness of from 0.2 to 1.5 mm.

6. First-wall component (1) according to one of Claims 1 to 5, **characterized in that** the heat shield (2) is connected in the region of the opening (8) of the tube segment (5) to the cooling tube (3) via a copper-containing region.

7. First-wall component (1) according to one of Claims 1 to 6, **characterized in that** the tube segment (5) consists of a material of the group comprising molybdenum, molybdenum alloy, tungsten and tungsten alloy.

8. First-wall component (1) according to Claim 7, **characterized in that** the tube segment (5) consists of Mo-Cu or W-Cu.

9. First-wall component (1) according to one of Claims 1 to 8, **characterized in that** the heat shield (2) consists of CFC.

10. First-wall component (1) according to one of Claims 1 to 9, **characterized in that** the cooling tube (3) consists of Cu-Cr-Zr.

11. First-wall component (1) according to one of Claims 1 to 10, **characterized in that** the passage (4) is a bore.

12. First-wall component (1) according to one of Claims 1 to 11, **characterized in that** the passage (4) is structured by means of a laser.

13. First-wall component (1) according to one of Claims 1 to 12, **characterized in that** the wall of the passage (4) has at least in certain regions a titanium carbide layer.

## Revendications

1. Composant de première paroi (1) d'un réacteur de fusion, comprenant au moins un bouclier thermique (2) en un matériau graphite et un tube de refroidissement (3) en cuivre ou en un alliage de cuivre, ledit bouclier thermique (2) présentant un passage (4) obturé ou ouvert, **caractérisé par** la présence, entre le bouclier thermique (2) et le tube de refroidissement (3), d'un segment annulaire (5) relié, au moins pour partie, au bouclier thermique (2) et au tube de refroidissement (3), par le biais de couches à teneur en cuivre (6, 7).

2. Composant de première paroi (1) selon la revendication 1 , **caractérisé par le fait que** le segment annulaire (5) présente un angle d'ouverture α compris entre 20 degrés et 180 degrés.

3. Composant de première paroi (1) selon la revendication 2, **caractérisé par le fait que** l'angle d'ouverture α du segment annulaire (5) est compris entre 50 degrés et 130 degrés.

4. Composant de première paroi (1) selon l'une quelconque des revendications 1 à 3, **caractérisé par le fait que** la bissectrice de l'angle d'ouverture α est perpendiculaire à la surface (9) du bouclier thermique (2) qui est exposée au plasma.

5. Composant de première paroi (1) selon l'une quelconque des revendications 1 à 4, **caractérisé par le fait que** l'épaisseur de paroi du segment annulaire (5) est comprise entre 0,2 mm et 1,5 mm.

6. Composant de première paroi (1) selon l'une quelconque des revendications 1 à 5, **caractérisé par le fait que** le bouclier thermique (2) est joint au tube de refroidissement (3), au niveau de l'ouverture (8), par le biais d'une zone à teneur en cuivre.

7. Composant de première paroi (1) selon l'une quelconque des revendications 1 à 6, **caractérisé par le fait que** le segment annulaire (5) est en un matériau du groupe molybdène, alliage au molybdène, tungstène, alliage au tungstène.

8. Composant de première paroi (1) selon la revendication 7, **caractérisé par le fait que** le segment annulaire (5) est en Mo-Cu ou en W-Cu.

9. Composant de première paroi (1) selon l'une quelconque des revendications 1 à 8, **caractérisé par le fait que** le bouclier thermique (2) est en CFC.

10. Composant de première paroi (1) selon l'une quelconque des revendications 1 à 9, **caractérisé par le fait que** le tube de refroidissement (3) est en Cu-Cr-Zr.

11. Composant de première paroi (1) selon l'une quelconque des revendications 1 à 10, **caractérisé par le fait que** le passage (4) est un vide de forure.

12. Composant de première paroi (1) selon l'une quelconque des revendications 1 à 1 1 , **caractérisé par le fait que** le passage (4) est structuré par laser.

13. Composant de première paroi (1) selon l'une quelconque des revendications 1 à 12, **caractérisé par le fait que** la paroi du passage (4) est dotée, au moins pour partie, d'une couche de carbure de titane.
